## Europäisches Patentamt
## European Patent Office
## Office européen des brevets

(19)

(11) Publication number: **0 349 645**

**A1**

# EUROPEAN PATENT APPLICATION

published in accordance with Art. 158(3) EPC

(21) Application number: **88906878.9**

(22) Date of filing: **28.07.88**

Data of the international application taken as a basis:

(86) International application number:
**PCT/JP88/00759**

(87) International publication number:
**WO89/05827 (29.06.89 89/14)**

(51) Int. Cl.⁵: **C 08 F 2/46**
**C 09 D 3/49, C 09 J 3/14**

(30) Priority: **15.12.87 JP 315115/87**
**20.04.88 JP 95723/88**
**26.04.88 JP 101244/88**
**26.04.88 JP 101245/88**

(43) Date of publication of application:
**10.01.90 Bulletin 90/2**

(84) Designated Contracting States:
**BE DE FR GB IT SE**

(71) Applicant: **NIPPON SHOKUBAI KAGAKU KOGYO CO. LTD.**
**1, Koraibashi 5-chome Higashi-ku**
**Osaka-shi Osaka 541(JP)**

(72) Inventor: **TSUBAKIMOTO, Tsuneo**
**10-4, 2-chome, Shinsenrikitamachi**
**Toyonaka-shi Osaka 565(JP)**

(72) Inventor: **ARITA, Yoshihiro**
**5-1-404, Nishimachi**
**Takatsuki-shi Osaka 569(JP)**

(72) Inventor: **YOSHIDA, Masatoshi**
**7-8-101, 2-chome, Matsuzakicho**
**Abeno-ku Osaka 545(JP)**

(72) Inventor: **IZUBAYASHI, Masuji**
**6-4, Ichigayacho**
**Nishinomiya-shi Hyogo 662(JP)**

(72) Inventor: **KIKUTA, Teruo**
**26-8, Kanegaharagoshonouchi**
**Nagaokakyo-shi Kyoto 617(JP)**

(72) Inventor: **HORI, Kouhei**
**5-10, 5-chome, Nogami Takarazuka-shi**
**Hyogo 665(JP)**

(72) Inventor: **BANBA, Akikazu**
**1-8-511, Fujinosato**
**Ibaraki-shi Osaka 567(JP)**

(72) Inventor: **FURUKAWA, Shinichi**
**31 A-401, 1-chome Yamadahigashi**
**Suita-shi Osaka 565(JP)**

(74) Representative: **Rees, David Christopher et al,**
**Kilburn & Strode 30 John Street**
**London WC1N 2DD(GB)**

(54) **PHOTO-SETTING COMPOSITION.**

(57) A photo-setting composition which comprises (A) a (co)polymer of a weight-average molecular weight of 10,000 or above obtained by (co)polymerizing at least one polymerizable monomer component containing at least 10 wt % of a member selected from the group consisting of methacrylate monomers and methyl acrylate and (B) a photopolymerizable monomer in a ratio of (A) to (B) of 40 – 99 (in terms of solid content): 60 – 1 (wt %), and which is substantially free from a photo-polymerization initiator. This composition is also used as a photo-setting coating agent, a photo-setting pressure-sensitive adhesive composition, and a photo-setting adhesive composition.

## DESCRIPTION
## PHOTO-CURABLE COMPOSITION
### TECHNICAL FIELD

This invention relates to a photo-curable composition and to use found therefor. More particularly, it relates to a photo-curable composition, a photo-curable coating agent, and a photo-curable pressure sensitive adhesive composition containing substantially no photopolymerization initiator, possessing an ability to cure rapidly on exposure to the ultraviolet light and produce a colorless highly weatherable coating, and excelling in stability to resist the impact of storage, a pressure sensitive adhesive object. It also relates to a photo-curable adhesive composition obtained by the use thereof, and to a method for adhesion by the use thereof.

### BACKGROUND ART

The UV-curable resins or the coating materials, adhesive agents, or pressure sensitive adhesive compositions using these resins have been heretofore utilized for coating and joining inorganic building materials, metallic substrates, lumber, paper, and plastics or in pressure sensitive adhesive tapes, sheets, and labels.

The conventional UV-curable resins or the coating materials, adhesive agents, or pressure sensitive adhesive compositions using these resins, however, have necessitated incorporation therein of a photopolymerization initiator in an amount generally in the range of 1 to 5% by weight and, in an extreme case, even more than 10% by weight for quick production of cured films on exposure to the ultraviolet light. Because the photopolymerization initiator is very unstable to the sunlight and heat, a coating agent, an adhesive agent, or a pressure sensitive adhesive agent containing 1% by weight or more of this photopolymerization initiator must be stored and applied to a surface under special illumination excluding the ultraviolet light. When the coating agent or the adhesive agent contains the photopolymerization initiator in a large amount, the cured film finally obtained on a given surface inevitably suffers from very poor weatherability and betrays discoloration because of the persistence of the photopolymerization initiator in the applied coating. Further, the fact that the photopolymerization initiator which is expensive is used in a large amount poses a problem from the economic point of view.

Various measures have been proposed for the elimination of the drawbacks arising from the use of the photopolymerization initiator in such a liberal quantity as mentioned above. For example, Japanese Patent Laid-Open SHO 60(1985)-23,411 discloses a self-crosslinking type photosesitive resin which possesses at least one polymerizing double bond and a photosensitive group in the molecular unit thereof. Though the photosensitive resin according with this disclosure is cured by the exposure to the ultraviolet light without benefit of the presence of a photosensitization initiator (photopolymerization initiator), it offers no radical solution to the drawbacks due to the photopolymerization initiator because the photosensitive resin itself possesses the photosensitive group. Japanese Patent Laid-Open SHO 62(1987)-18,403 discloses the use of the combination of a thiophosphoric acid derivative and an α-diketone as a photopolymerization initiator in a photopolymerizing composition comprising a vinyl type monomer and the photopolymerization initiator. Though the photopolymerizing composition according with this disclosure is capable of producing a coating which is only sparingly discolored immediately after curing, it is unstable to the sunlight and fails to offer fully satisfactory lasting weatherability.

It is, therefore, an object of this invention to provide a novel photo-curable composition.

Another object of this invention is to provide a photo-curable composition, a photo-curable coating agent, and a photo-curable pressure sensitive adhesive composition containing substantially no photopolymerization initiator and exhibiting an ability to cure quickly on exposure to the ultraviolet light and form an uncolored highly weatherable coating and excelling in stability to resist the impact of storage, a pressure sensitive adhesive object and a photo-curable adhesive composition obtained by the use thereof, and a method for adhesion by the use thereof.

DISCLOSURE OF THE INVENTION

The objects mentioned above are accomplished by a photo-curable composition, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 99% by weight (as solids) of the (co)polymer (A) : 60 to 1% by weight of the photopolymerizable monomer (B) and containing substantially no photopolymerization initiator.

The objects are further accomplished by a photo-curable coating agent, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 98% by weight (as solids) of the (co)polymer (A) : 60 to 2% by weight of the photopolymerizable monomer (B) and containing substantially no photopolymerization initiator.

The objects are also accomplished by a photo-curable adhesive composition, characterized by comprising (A) a (co)polymer of a weight average molecular weight of not less than 10,000 obtained by (co)polymerizing a polymerizable monomer component containing in a ratio of not less than 10%

-3-

by weight at least one polymerizable monomer selected from the group consisting of methacrylate monomers and methyl acrylate and (B) a photopolymerizable monomer in a ratio of 40-to 98% by weight (as solids) of the (co)polymer (A) : 60 to 2% by weight of the photopolymerizable monomer (B) and containing substantially no photopolymerization initiator.

The objects are accomplished by a method for the union of two objects by mutual adhesion of the opposed surfaces thereof, characterized by forming on at least one of the opposed surfaces a coating of a photo-curable adhesive composition comprising (A) a (co)polymer of a weight average molecular weight of not less than 10,000 obtained by (co)polymerizing a polymerizable monomer component containing in a ratio of not less than 10% by weight at least one polymeriable monomer selected from the group consisting of methacrylate monomers and methyl acrylate and (B) a photopolymerizable monomer in a ratio of 40 to 98% by weight (as solids) of the (co)polymer (A) : 60 to 2% by weight of the photopolymerizable monomer (B) and containing substantially no photopolymerization initiator, applying the objects fast to each other across the coating, and curing the coating by exposure to an active energy ray thereby effecting the union.

The objects are further accomplished by a photo-curing pressure sensitive adhesive composition, characterized by comprising (A) a (co)polymer of a weight average molecular weight of not less than 10,000 and a glass transition temperature of not higher than -20°C obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 90% by weight (as solids) of the (co)polymer (A) : 60 to 10 by weight of the photopolymerizable monomer (B) and containing substantially no photopolymerization initiator.

The objects are also accomplished by an object of pressure sensitive adhesion, obtained by using as an adhesive agent layer thereof the set product of a photo-curable pressure sensitive adhesive composition, charaterized by comprising (A) a (co)polymer of a weight average molecular weight of not less than 10,000 and a glass transition temperature of not higher than -20°C obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 90 to 99% by weight (as solids) of the (co)polymer (A) : 10% to 1% by weight of the photopolymerizable monomer (B) and containing substantially no photopolymerization initiator.

BEST MODE FOR CARRYING OUT THE INVENTION

The term "methacrylate monomers" as used in the present invention refers to ester compounds of methacrylic acid with monohydric alcohols or dihydric alcohols. The methacrylate monomers which are specifically usable herein include alkyl esters of methacrylic acid such as methyl, ethyl, propyl, isopropyl, butyl, isobutyl, sec-butyl, tert-butyl, isooctyl, 2-ethylhexyl, lauryl, stearyl, cyclohexyl, and 4-tert butyl cyclohexyl esters of methacrylic acid; hydroxyethyl methacrylate, hydroxypropyl methacrylate, glycidyl methacrylate, mono- and di-esters of methacrylic acid with polyethylene glycohols, mono- and di-esters of methacrylic acid with polypropylene glycol, and diesters of methacrylic acid with such dihydric alcohols as ethylene glycol, 1,3-butylene glycol, 1,6-hexanediol, and neopentyl glycol, for example. From these methacrylate monomers, one member or a mixture of two or more members may be suitably selected and put to use. In terms of the performance of the photo-curable composition, the most desirable of these methacylate type monomers are alkyl esters of methacrylic acid whose alkyl groups have 1 to 12 carbon atoms.

In combination with the methacrylate monomers and/or methyl acrylate, this invention may optionally use a monomer copolymerizable therewith. The polymerizable monomer which is thus used in combination is not specifically restricted. A known compound possessing a polymerizable carbon-carbon double bond can be arbitrarily used in an amount less than 90% by weight in the polymerizable monomer. The monomers which are copolymerizable with the methacrylate monomers and/or methyl acrylate include ethyl acrylate, n-propyl acrylate, isopropyl acrylate, n-butyl acrylate, isobutyl acrylate, 2-ethylhexyl acrylate, lauryl acrylate, stearyl acrylate, t-butyl aminoethyl acrylate, cyclohexyl acrylate, ethylene, styrene, vinyl toluene, vinyl acetate, vinyl chloroacetate, and (meth)acrylonitriles, for example.

The methacrylate monomer and/or methyl actylate to be used as the component of the (co)polymer (A), for a reason not necessarily plain, fulfils an important effect of imparting a photo-curable property or a photopolymerizing property to the composition comprising the (co)polymer (A) and the photopolymerizable monomer (B). The composition of this invention, therefore, is cured at a fully practical speed even by the use of the ultraviolet light as an active energy source in spite of the fact that it contains substantially no photopolymerization initiator.

The amount of the methacrylate monomer and/or methyl acrylate to be used in the preparation of the (co)polymer (A) is not less than 10% by weight, preferably not less than 30% by weight where the photo-curable composition of this invention is utilized as a coating agent or an adhesive agent or not less than 20% by weight where the composition is utilized as a pressure sensitive adhesive agent. If this amount is less than 10% by weight, the composition is not cured quickly or amply and the produced coating is deficient in quality.

The (co)polymer (A) can be produced by any of such known methods as solution polymerization, bulk polymerization, and emulsion polymerization. The (co)polymer (A) may assume the form of a solid, a solution in an organic solvent, or an aqueous dispersion. It is preferable to be in the form of a solid or an aqueous dispersion which has no possibility of causing a fire or polluting the environment during the course of handling. From the standpoint of the workability, it is particularly desired to be in the form of an aqueous dispersion.

The weight average molecular weight of the (co)polymer (A) is required to be not less than 10,000, and is preferable to be in the range of 100,000 to 3,000,000. If the weight average molecular weight is less than 10,000, there arises the disadvantage that the photo-curable composition is deficient in curing rate and curing degree or and the produced coating betrays poor quality.

The photopolymerizable monomer (B) to be used in the present invention has no particular restriction except for a sole requirement that it should be a compound possessing at least one radically polymerizable carbon-carbon double bond within the molecular unit thereof. The photopolymerizable monomers which are usable in this invention include mono(meth)acrylates of alcohols or polyols such as methyl methacrylate, ethyl (meth)acrylates, n-propyl (meth)acrylates, isopropyl (meth)acrylates, n-butyl (meth)acrylates, isobutyl (meth)acrylates, 2-ethylhexyl (meth)acrylates, lauryl (meth)acrylates, stearyl (meth)acrylates, tert-butylaminoethyl (meth)acrylates, 2-cyanoethyl (meth)acrylates, cyclohexyl (meth)acrylates, 4-tert-butyl cyclohexyl (meth)acrylates, 2,3-dibromopropyl (meth)acrylates, dicyclopentenyl (meth)acrylates, dicyclopentenyloxyethyl (meth)acrylates, 2-(N,N-diethylamino)ethyl (meth)acrylates, ethoxyethyl (meth)acrylates, glycidyl (meth)acrylates, isobornyl (meth)acrylates, isodecyl (meth)acrylates, methoxyethyl (meth)acrylates, tetrahydrofurfuryl (meth)acrylates, and 1,3-butylene glycol mono(meth)acryaltes, polyol (meth)acrylates, such as 1,3-butylene glycol di(meth)acrylates, 1,4-butanediol di(meth)acrylates, 1,6-hexanediol di(meth)acrylates, neopentyl glycol di(meth)acrylates, trimethylol propane methoxylated tri(meth)acrylates, pentaerythritol tri(meth)acrylates, Pentaerythritol tetra(meth)acrylates, dipentaerythritol penta(meth)acrylates, and ethoxylated bisphenol A di(meth)acrylates (poly)alkylene glycol mono(meth)acrylates, and (poly)alkylene glycol mono(meth)acrylates, such as 2-hydroxyethyl (meth)acrylates and hydroxypropyl (meth)acrylates, and ethylene glycol di(meth)acrylates, triethylene glycol di(meth)acrylates, tripropylene glycol di(meth)acrylates, and tetraethylene glycol di(meth)acrylates, aromatic vinyl monomers such as vinyl chloroacetate, ethylene, vinyl toluene, and divinyl benzene, and N-vinyl caprolactam, and N-vinyl pyrrolidone for example. For the purpose of enhancing the curable rate and the curable degree of the composition and improving the quality of the set coating, it is preferable to use essentially at least one member selected from the group consisting of di-, tri-, tetra-, penta- and hexa-esters of polyhydric alcohols with (meth)acrylic acids, among other photopolymerizable monomers enumerated above.

The photopolymerizable monomer (B) naturally functions as a photopolymerizable or photo-curable component in the photo-curable composition of the present invention. When the (co)polymer (A) is in the form of an aqueous dispersion, this photopolymerizable monomer (B) functions additionally as a film-forming agent for the aqueous dispersion and enables the characteristic of this invention to be manifested conspicuously. As universally known, the ordinary aqueous dispersion such as the emulsion polymer of a vinyllic monomer has a poor film-forming property and the coating formed of this aqueous dispersion is deficient in strength and has the restriction of its lowest film-forming temperature (MFT). When the ambient temperature during the

0349645

formation of the coating is lower than the MFT, the coating cannot be continuously formed.

For the purpose of improving the film-forming property and lowering the MFT, it has been customary to use an organic solvent of a relatively high boiling point as a film-forming agent. The organic solvent of this nature is liable to persist in the produced coating and consequently decrease the rigidity and strength of the coating and impair the waterresistance and the antiblocking resistance. In the case of one embodiment of the photo-curable composition of this invention, i.e. the photo-curable composition, the photo-curable coating agent, the photo-curable adhesive composition, and the photo-curable pressure sensitive adhesive composition severally comprising the aqueous dispersion of the (co)polymer (A) and the photopolymerizable monomer (B), the photopolymerizable monomer (B) during the formation of a coating manifests its effect as a film-forming agent to ensure formation of a coating of a satisfactory film-forming property and the (co)polymer (A) and the photopolymerizable monomer (B), on exposure to an active energy ray such as the ultraviolet light, are integrally set. Unlike the conventional film-forming agent which persists in the form of a low molecular compound in the cured film and produces an adverse effect thereon, the photopolymerizable monomer (B) lends itself to the formation of the coating excelling in various properties.

Further, when the photo-curable composition of this invention is used as an adhesive composition, the photopolymerizable monomer (B) acts as a plasticizer upon the (co)polymer not exclusively when the (co)polymer is in the form of an aqueous dispersion, with the result that the adhesive composition, prior to being cured by exposure to light, is vested with adhesiveness and, subsequently during the union of two articles, is allowed to manifest this adhesiveness to advantage.

-9-

When the (co)polymer is in the form of an aqueous dispersion, the photopolymerizable monomer (B) which is used in combination therewith is preferable to possess an average molecular weight in the range of 100 to 1,000, preferably 100 to 800, a solubility parameter in the range of 8 to 12, preferably 8.5 to 11, and a boiling point at 760 mmHg of not lower than 100°C, preferably not lower than 180°C, in order that the effect thereof to be manifested as a film-forming agent and optionally as a plasticizer may be improved. The term "solubility prarameter" (designated as "$\delta$" ) mentioned above is the numerical value which is calculated from the formula, $\delta = d\Sigma G/M$ (wherein d is specific gravity, M is molecular weight, and G is group molar attraction constant derived from the vapor pressure by Hoy [J. Paint Technol, 42, 76 (1970)]. If the average molecular weight of the photopolymerizable monomer (B) is less than 100, the monomer fails to manifest the effect of lowering the MFT of the aqueous dispersion of the (co)polymer (A). Conversely, if the average molecular weight exceeds 1,000, the photopolymerizable monomer (B) ceases to be easily absorbed by the particles of the (co)polymer in the aqueous dispersion. If the solubility parameter deviates from the range of 8 to 12, the photopolymerizable monomer (B) and the (co)polymer (A) are deficient in compatibility. If the boiling point is lower than 100°C, the photopolymerizable monomer (B) exhibits an unduly high volatility. In any of these cases, the effect the photopolymerizable monomer (B) produces as a film-forming agent or a plasticizer is not sufficient. The (co)polymer (A) and the photopolymerizable monomer (B) are used in such amounts that the ratio of the (co)polymer (A) : the photopolymerizable monomer (B) is in the range of 40 to 99% by weight (as solids) : 60 to 1% by weight, preferably 50 to 98% by weight : 50 to 2% by weight. If the ratio of the amounts used falls outside the range mentioned above, the curable speed and the curing degree of the produced composition are insufficient and the cured film exhibits inferior quality.

Particularly when the photo-curable composition of this invention is utilized as a coating agent or an adhesive agent, the (co)polymer (A) and the photopolymerizable monomer (B) are preferable to be used in such amounts that the ratio of the (co)polymer (A) : the photopolymerizable monomer (B) is in the range of 40 to 98% by weight (as solids) : 60 to 2% by weight, preferably 50 to 95% by weight : 50 to 5% by weight.

When the photo-curable composition of this invention is utilized as a pressure sensitive adhesive agent, the (co)polymer (A) and the photopolymerizable monomer (B) are preferable to be used in such amounts that the ratio of the (co)polymer (A) : the photopolymerizable monomer (B) is in the range of 90 to 99% by weight (as solids) : 10 to 1% by weight, preferably 95 to 98% by weight : 5 to 2% by weight. In this case, the (co)polymer (A) is desired to possess a glass transition point not exceeding $-20°C$, preferably falling in the range of $-30°$ to $-60°C$.

The production of the photo-curable composition of this invention from the (co)polymer (A) and the photopolymerizable monomer (B) is accomplished, when the (co)polymer is in the form of an aqueous dispersion, simply by adding the photopolymerizable monomer (B) to the aqueous dispersion of the (co)polymer (A) and stirring them at room temperature or an elevated temperature until the discernible residue of liberated photopolymerizable monomer (B) ceases to exist. When the (co)polymer (A) is in the form of a solid or a solution in an organic solvent, the production is accomplished by uniformly mixing this (co)polymer and the photopolymerizable monomer (B).

While the photo-curable composition of this invention can be utilized solely as a coating agent or an adhesive agent for various purposes, it may incorporate therein such known additives as a viscosity adjusting agent,

-11-

a pH adjusting agent, and a coloring agent as occasion demands.

The photo-curable composition can form a cured film on exposure to a visible ray, ultraviolet light, or electron beam, for example. Among other active rays mentioned above, the ultraviolet light proves to be particularly advantageous from the standpoint of the curing rate and the expense for the curing.

Further, the photo-curable coating agent of this invention may incorporate therein various conventional additives such as a stabilizer, a varying organic or inorganic coloring agent, and a modifying agent, depending on the purpose for which it is to be used. As one example of the stabilizer, a thermal polymerization inhibitor useful during the production or during the storage may be cited. The coloring agents which are usable herein include inorganic pigments such as titanium white, iron oxide red, and carbon black, organic pigments such as azo type, phthalocyanine type, and lake pigments, and dyes, for example. Such other additives as a dispersant, a wetting agent, a defoaming agent, and a flow-adjusting agent may be incorporated as occasion demands, by any of the methods well known to persons skilled in the art.

In the coating agent, a photopolymerization initiator may be used, when necessary, in an amount in the range of 0 to 0.5% by weight, based on the total amount of the (co)polymer (A) (as solids) and the photopolymerizable monomer (B). For the sake of the stability of the coating agent to resist the impact of storage and the various properties of the produced coating, the amount of the photopolymerization initiator so used is desired to be as small as possible. This amount is preferable to be in the range of 0 to 0.1% by weight. Absolutely no use of the photopolymerization initiator proves to be most preferable. The coating agent using not less than 0.5% by weight of the photopolymerization initiator is very unstable to the sunlight or heat and, therefore, often undergoes gelation during storage or during the work of application. Since the photopolymerization initiator persists in the cured film, the coating is notably deficient weatherability. The photopolymerization initiators which are usable herein include benzoin type, benzophenone type, halogenated sulfonyl type, ketone type, azo type, and peroxide type photopolymerization initiators, for example, which are invariably well known to the art.

The photo-curable coating agent of this invention can be set by exposure to an active energy ray such as the ultraviolet light or the electron beam as practised conventionally. From the standpoint of the curing rate and the expense for the curing, it is particularly preferable to use the ultraviolet light and allow the characteristic of the photo-curable coating agent of this invention to be manifested to the best advantage. The exposure has only to be made to the extent of effecting discernible curable. The dosage of energy required of the exposure may be fixed so as to suit the kinds and quantities of the components for the coating agent, the thickness of the applied coating, the oxygen concentration in the ambient air, and the temperature of the ambient air. Optionally, the curable may be made partially by dint of the active energy ray and subsequently allowed to proceed at room temperature or an elevated temperature until completion.

The photo-curable adhesive composition of this invention may incorporate therein such known additives as a stabilizer, a tackifier, and a cross-linking agent to suit the purpose for which the composition is used. As one example of the stabilizer, a thermal polymerization inhibitor to be used during the production or during the storage may be cited. The tackifiers which are usable herein include rosin type resins, petrolic resins, cumarone indene type resins, and phenol resins, for example. The cross-linking agents which are usable herein include epoxy

-13-

type compounds, melamine type compounds, and isocyanate type compounds, for example. Such additives as a dispersant, a wetting agent, a defoaming agent, a thickener, a pH adjusting agent, a flow adjusting agent, and a coloring agent may be additionally incorporated, as occasion demands, in the photo-curable adhesive composition by the method well known to persons of ordinary skill in the art. The photo-curable adhesive composition of this invention, similarly to the coating agent of this invention, may incorporate therein a small amount of the photopolymerization initiator. For the reason mentioned above, absolutely no use of the photopolymerization initiator is desirable.

The photo-curable adhesive composition of this invention can be cured by exposure to an active energy ray such as the ultraviolet light or the electron beam, gamma ray as practised conventionally. From the standpoint of the curing rate and the expense for the curing, it is particularly preferable to use the ultraviolet light. The exposure has only to be made to the extent of effecting discernible curing. The dosage of energy required of the exposure may be fixed so as to suit the kinds and quantities of the components for the adhesive composition, the thickness of the applied coating, the oxygen concentration in the ambient air, and the temperature of the ambient air. Optionally, the curing may be made partially by dint of the active energy ray and subsequently allowed to proceed at room temperature or an elevated temperature until completion.

The method for union according with this invention is aimed at enabling the photo-curable adhesive composition, while being used in mutual adhesion of two objects, to manifest the characteristic thereof most effectively. It attains the union by applying the photo-curable adhesive composition to at least one of the opposed surfaces of the objects subjected to mutual adhesion, optionally drying the applied layer of the composition thereby forming a coating

-14-

thereon, attaching the two objects fast to each other across the coating, and irradiating the coating with an active energy ray thereby curing it.

The active energy rays which are usable herein include ultraviolet light, electron beam, and gamma ray, for example. When at least one of the two objects subjected to the union is pervious to light, it is advantageous to use the ultraviolet light as the active energy ray because the device for the exposure is simple and the characteristic of the photo-curable adhesive composition can be utilized most effectively.

The objects which are pervious to light include various kinds of glass and plastics, for example, which have been known to the art. Among other objects mentioned above, quartz glass, polyethylene, and polypropylene which possess high degrees of permeability to the ultraviolet light are used advantageously. The objects thus pervious to light are desired to have a thickness of not more than 5 mm from the standpoint of the curing rate. The other object to which the object pervious to light is joined is not particularly limited but may be suitably selected from a wide variety of objects. The other objects which are usable herein include light-pervious objects similar to or different from the light-pervious object selected for the application of the composition and such light-impervious objects as inorganic materials, metals, paper, cloth, and plastics, for example.

The union of such two objects by virtue of the ultraviolet light is accomplished simply by attaching the light-pervious object and the other object fast to each other through the medium of an applied layer of the photo-curable adhesive composition and subsequently exposing the applied layer of the composition to the ultraviolet light impinging thereon through the light-pervious object side thereby curing the composition and fastening the objects to each other.

Optionally, the photo-curable pressure sensitive adhesive composition of this invention may incorporate therein such known additives as a stabilizer, a tackifier, and a cross-linking agent to suit the purpose for which the composition is used. As one example of the stabilizer, a thermal polymerization inhibitor useful during the production or during the storage may be cited. The tackifiers whcih are usable herein include rosin type resins, petrolic type resins, cumarone type resins, and phenol type resins, for example. The cross-linking agents which are usable herein include epoxy type compounds, melamine type compounds, and isocyanate type compounds, for example. Such other additives as a dispersant, a wetting agent, a defoaming agent, a thickener, a pH adjusting agent, a flow adjusting agent, and a coloring agent may be optionally incorporated in the composition by the method well known to persons skilled in the art. The photo-curable pressure sensitive adhesive composition of this invention, similarly to the coating agent of this invention, may incorporate therein a small amount of the photopolymerization initiator. For the reason mentioned above, absolute no use of the photopolymerization initiator is desirable.

The photo-curable pressure sensitive adhesive composition of this invention can be cured by exposure to such an active energy ray as the ultraviolet light or the electron beam as conventionally practised. Among other active energy rays mentioned above, the ultraviolet light proves to be advantageous from the standpoint of the curing speed and the expense for the curing. The time of the exposure is only required to be enough for the agent to be cured discernibly. The dosage of energy required of the exposure may be suitably fixed to suit the kinds and quantities of the components of the photo-curable pressure sensitive adhesive composition, the thickness of the applied layer of the composition, the oxygen concentration in the ambient air, and the temperature of the ambient air. Optionally, the curing may be made partially by dint of the active energy ray and subsequently allowed to proceed at room temperature or an elevated temperature until completion.

The pressure sensitive adhesive article of the present invention is a product obtained by using as an adhesive layer thereof the cured product of the photo-curable pressure sensitive adhesive composition of this invention. The concrete pressure sensitive adhesive articles which are contemplated by this invention include a pressure sensitive adhesive tape, a pressure sensitive adhesive sheet, and a pressure sensitive adhesive label, for example. Specifically, the pressure sensitive articles which conform to the present invention are as follows.

(1) A pressure sensitive adhesive tape, sheet, or label vested on at least one surface thereof with pressure sensitive adhesiveness, produced by applying the aforementioned photo-curable pressure sensitive adhesive composition to the release-treated surface of paper or film generally designated as release sheet, preferably drying the applied layer of the composition at a temperature lower than 100°C when the composition contains an organic solvent or water, transferring the resultant film of the composition onto one surface or both surfaces of a substrate of paper, film, woven fabric, or nonwoven fabric, and thereafter exposing the surface of the resultant film to an active energy ray such as ultra violet light.

(2) A pressure sensitive adhesive tape, sheet, or label vested on at least one surface thereof with pressure sensitive adhesiveness, produced by applying the aforementioned photo-curable pressure sensitive adhesive composition to the release-treated surface of paper or film generally designated as release sheet, preferably drying the applied layer of the composition at a temperature lower than 100°C when the composition contains an organic solvent or

-17-

water, then exposing the applied layer of the composition to an active energy ray such as the ultraviolet light thereby producing a cured film, and transferring the film onto at least one surface of a substrate of paper, film, woven fabric, or non-woven fabric.

(3) A pressure sensitive adhesive tape, sheet, or label vested on at least one surface thereof with pressure sensitive adhesiveness, produced by directly applying the aforementioned photo-curable pressure sensitive adhesive composition to one surface or both surfaces of a substrate, optionally drying the applied layer of the composition in the same manner as in (2) above, and exposing the resultant film of the composition to an active energy ray such as the ultraviolet light.

(4) A double-faced pressure sensitive adhesive tape or sheet, produced by impregnating a permeable substrate such as, for example non-woven fabric of a small density, with the aforementioned photo-curable pressure sensitive adhesive composition, optionally drying the impregnated substrate in the same manner as in (2) above, and exposing the resultant composite film of the composition to an active energy ray such as ultraviolet light.

(5) An unsupported double-faced pressure sensitive adhesive tape or sheet, one form of the pressure sensitive adhesive article according with the present invention, produced by applying the aforementioned photo-curable pressure sensitive adhesive composition on a release paper, optionally drying the applied layer of the composition in the same manner as in (2) above, and exposing the resultant coating of the composition to an active energy ray such as the ultraviolet light.

(6) A pressure sensitive adhesive tape, sheet, or label vested on at least one surface thereof with pressure sensitive adhesiveness, produced by transferring the double-faced pressure sensitive adhesive article of (4) and/or the double-faced pressure sensitive adhesive article of (5) onto one surface or both surfaces of a substrate.

Of the pressure sensitive adhesive articles of this invention obtained as described above, those provided with a substrate are desired, from the standpoint of anchoring property of the pressure sensitive adhesive agent layer to the substrate, to be produced by directly applying the photo-curable pressure sensitive adhesive composition of the present invention to the substrate or transferring a film of the composition from a release paper to the substrate and thereafter exposing the film to an active energy ray such as the ultraviolet light. Those provided with the substrate and obtained as described above can also be advantageously utilized as removable pressure sensitive adhesive tapes, sheets, or labels.

Now, the present invention will be described below with reference to working examples. It should be noted, however, that this invention is not restricted by these examples. In the examples, wherever the term "parts" and the term "percents" are mentioned, they are invariably means respectively as "parts by weight" and "percents by weight" unless otherwise specified. The "average molecular weights" of (co)polymers mentioned therein are meant as weight average molecular weights without exception.

Example 1

In a flask provided with a stirrer, an inert gas inlet, a dropping funnel, a reflux condenser, and a thermometer, 1.5 parts of sodium lauryl sulfate, 0.3 part of potassium persulfate, and 152 parts of water were placed and, under gentle continuous introduction therein of nitrogen gas, heated at 75°C and stirred to form a homogeneous aqueous solution. Then, into this aqueous solution, a polymerizable monomer component prepared in advance by mixing 63 parts of methyl methacrylate, 35 parts of ethyl acrylate, and 2 parts of acrylic acid was added dropwise via the dropping funnel over a period of two hours.

-19-

The resultant mixture was kept at 75°C, further stirred for one hour, cooled to 30°C, adjusted to pH 7.5 by addition of aqua ammonia of a concentration of 28%, to obtain an aqueous dispersion of a copolymer (1) possessing an involatile content of 40.1% and a MFT of not lower than 50°C. The average molecular weight of this copolymer (1) was about 150,000.

Then, 100 parts of the aqueous dispersion of the copolymer (1) and 8 parts of diethylene glycol diacrylate (possessing a molecular weight of 214, a boiling point of not lower than 200°C, and a solubility parameter of 10.0) added thereto as a photopolymerizable were stirred at 50°C for one hour to effect absorption of the monomer in the particles of the copolymer and attain production of a photo-curable composition (I).

Example 2

An aqeuous dispersion of a copolymer (2) possessing an involatile content of 40.0% and a MFT of not lower than 50°C was obtained by following the procedure of Example 1, except that the polymerizable monomer component was composed of 42 parts of methyl methacrylate, 53 parts of methyl acrylate, and 5 parts of methacrylic acid. The average molecular weight of this copolymer (2) was about 170,000.

Then, a photo-curable composition (II) was obtained by repeating the procedure of Example 1, except that 10 parts of trimethylol propane triacrylate (possessing a molecular weight of 296, a boiling point of not lower than 200°C, and a solubility parameter of 9.5) was used instead as a photopolymerizable monomer.

Example 3

A photo-curable composition (III) was obtained by following the procedure of Example 1, except that 100 parts of the aqueous dispersion of the copolymer (1) obtained in Example 1 and a mixture consisting of 7 parts of dipentaerythritol hexaacrylate (possessing a molecular weight of 578, a boiling point of not lower than 200°C, and a solubility parameter of 10.1) and 3 parts of 2-ethylhexyl acrylate (possessing a molecular weight of 184, a boiling point of 219°C, and a solubility parameter of 8.6) as photopolymerizable monomers were used instead.

Example 4

In the same apparatus as used in Example 1, 0.3 part of potassium persulfate and 98 parts of water were placed and, under gentle continuous introduction of nitrogen gas, heated at 65°C and stirred to form a homogeneous aqueous solution. Then, to this aqueous solution, 157 parts of a monomer preemulsion prepared in advance with 100 parts of a polymerizable monomer component consisting of 60 parts of methyl methacrylate, 37 parts of ethyl acrylate, and 3 parts of allyl acrylate, and 7 parts of a nonionic surfactant (produced by Dai-ichi Kogyo Seiyaku Co., Ltd. and marketed under trademark designation of "Nonypole 400"), and 50 parts of water were added dropwise via the first dropping funnel and 12.6 parts of an aqueous solution obtained by dissolving 0.15 part of sodium hydrogen sulfite in 12.3 parts of water was added dropwise via the second dropping funnel. The resultant mixture was heated to 75°C, stirred continuously for one hour, and then cooled to 30°C to obtain an aqueous dispersion of a copolymer (3) possessing an involatile content of 40.1% and a MFT of not lower than 50°C. The average molecular weight of the copolymer (3) was about 200,000.

Then, 100 parts of the aqueous dispersion of the copolymer (3) and a mixture containing of 20 parts of trimethylol propane triacrylate (possessing a molecular weight of 296, a boiling point of not lower than 200°C, and a solubility parameter of 9.5), 10 parts of hexamethylene diacrylate (possessing a molecular weight of 226, a boiling point of not lower than 200°C, and a solubility parameter of 9.5), and 10 parts of N-vinyl pyrrolidone (possessing a molecular weight of 111, a boiling point of 214°C, and a solubility parameter of 10.6) added thereto as a photopolymerizable monomer were stirred at 40°C for three hours to effect as absorption of the monomer in the particles of the copolymer and attain production of a photo-curable composition (IV).

Example 5

An aqueous dispersion of a copolymer (4) possessing an involatile content of 40.0% and MFT of 10°C was obtained by following the procedure of Example 1, except that the polymerizable monomer component was composed of 50 parts of methyl methacrylate, 48 parts of butyl acrylate, and 2 parts of acrylic acid. The average molecular weight of the copolymer (4) was about 160,000.

Then, a photo-curable composition (V) was obtained by following the procedure of Example 1, except that 5 parts of trimethylol propane triacrylate was used instead as a photopolymerizable monomer.

Control 1

An aqueous dispersion of a copolymer (1a) for comparison possessing an involatile content of 39.8% and a MFT of not lower than 50°C was obtained by following the procedure of Example 1, except that the polymerizable monomer component was composed of 63 parts of styrene, 35 parts of ethyl acrylate, and 2 parts of acrylic acid. The average molecular weight of the copolymer (1a) for comparison was about 130,000.

Then, a composition (Ia) for comparison was obtained by following the procedure of Example 1, except that 10 parts of trimethylol propane triacrylate was used instead as a photopolymerizable monomer.

Control 2

An aqueous dispersion of a copolymer (2a) for comparison possessing an involatile content of 39.9% and a MFT of 8°C was obtained by following the procedure of Example 1, except that the polymerizable monomer component was composed of 50 parts of styrene, 48 parts of butyl acrylate, and 2 parts of acrylic acid. The average molecular weight of the copolymer (2a) for comparison was about 150,000.

Then, a composition (IIa) for comparison was obtained by following the procedure of Example 1, except that 10 parts of trimethylol propane triacrylate was used instead as a photopolymerizable monomer.

Example 6

In the same flask as used in Example 1, 100 parts of toluene was placed and, under slow continuous introduction of nitrogen gas, heated at 60°C. Then, to the hot solvent, a polymerizable monomer component prepared in advance by mixing 35 parts of methyl methacrylate, 65 parts of butyl acrylate, and 0.1 part of benzoyl peroxide was added dropwise over a period of four hours. Then, the resultant mixture was stirred at the same temperature for eight hours and cooled to room temperature. Consequently, there was obtained a solution of a copolymer (5) possessing an involatile content of 50.0%. The average molecular weight of the copolymer (5) was about 100,000.

Then, a photo-curable composition (VI) was obtained by stirring 100 parts of the solution of the polymer (5) and 15 parts of trimethylol propane triacrylate added thereto as a photopolymerizable monomer.

Control 3

A solution of a copolymer (3a) for comparison possessing an involatile content of 49.8% was obtained by following the procedure of Example 6, except that the polymerizable monomer component was composed of 35 parts of styrene, 65 parts of butyl acrylate and 0.1 part of benzoyl peroxide. The average molecular weight of the copolymer (3a) for comparison was about 90,000.

Then, a composition (IIIa) for comparison was obtained by following the procedure of Example 6, except that 15 parts of bisphenol A diacrylate was used instead as a photopolymerizable monomer.

Control 4

In the same flask as used in Example 1, 100 parts of toluene was placed and, under slow continuous introduction of nitrogen gas, heated to 80°C. Then, into the hot solvent, a polymerizable monomer component prepared in advance by mixing 35 parts of methyl methacrylate, 65 parts of butyl acrylate, and 4 parts of dodecyl mercaptan, and 1 part of benzoyl peroxide was added dropwise over a period of three hours. The resultant mixture was continuously stirred at the same temperature for three hours and then cooled to room temperature, to obtain a solution of a copolymer (4a) for comparison. The average molecular weight of the copolymer (4a) for comparison was about 5,000.

A composition (IVa) for comparison was obtained by stirring 100 parts of the solution of the copolymer (4a) for comparison and 15 parts of trimethylol propane triacrylate added thereto as a photopolymerizable monomer at room temperature.

Example 7

Samples of the aqueous dispersions (or solutions) of the copolymers (1) to (5), the aqueous dispersions (or solutions) of the copolymers (1) to (4) for comparison, the photo-curable compositions (I) to (VI), and the compositions (I) to (VI) for comparison obtained in the working examples and the controls described above were severally spread on glass plates. The cured films consequently formed in the glass plates were tested for properties as follows.

Preparation of test sheet

Application to glass plate: With a bar coater, a given sample was applied in an amount calculated to produce a dry layer 10 microns in thickness and then left standing at room temperature to expel water or toluene by evaporation.

Exposure to ultraviolet light: A given test sheet was placed at a distance of 10 cm from a high-pressure mercury-vapor lamp of 120 W/cm and exposed to the light from the lamp for about 3 seconds.

Evaluation of film-forming property: A test sheet allowed to continue the formation of film at room temperature was labeled with the circle (o) and a test sheet not allowed to do so with the cross. (x).

Method for testing film properties

Antiblocking resistance: Two test pieces from one sample were superposed with the coated surfaces opposed to each other, left standing under a pressure of 2 kg/cm$^2$ at 50°C for six hours, and thereafter separated from each other. A pair of test sheets showing no abnormal phenomenon on the separated surfaces was labeled with the circle (o) and a pair of test sheets whcih sustained an injury on the separated surfaces with the cross (x).

Pencil hardness: This property was carried out by the procedure specified in Japanese Industrial Standard (JIS) K 5400.

Waterresistance: This property was carried out by immersing a given test sheet in tap water at room temperature for 24 hours. A test sheet which formed no blister was labeled with the circle (o) and a test sheet which formed blisters with the cross (x).

The test results were as shown in Table 1.

Table 1

| | Substance applied No. | Film forming property | Properties tested | | |
|---|---|---|---|---|---|
| | | | Antiblocking resistance | Pencil hardness | Water resistance |
| Example 1 | Aqueous dispersion of copolymer (1) <br> Photo-curable composition (I) | ×<br>○ | –<br>○ | –<br>HB | –<br>○ |
| Example 2 | Aqueous dispersion of copolymer (2) <br> Photo-curable composition (II) | ×<br>○ | –<br>○ | –<br>H | –<br>○ |
| Example 3 | Aqueous dispersion of copolymer (1) <br> Photo-curable composition (III) | ×<br>○ | –<br>○ | –<br>H | –<br>○ |
| Example 4 | Aqueous dispersion of copolymer (3) <br> Photo-curable composition (IV) | ×<br>○ | –<br>○ | –<br>2H | –<br>○ |
| Example 5 | Aqueous dispersion of copolymer (4) <br> Photo-curable composition (V) | ○<br>○ | ×<br>○ | 5B<br>F | △~×<br>○ |
| Control 1 | Aqueous dispersion of copolymer (1a) for comparison <br> Composition (Ia) for comparison | ×<br>○ | –<br>△ | –<br>2B | –<br>× |
| Control 2 | Aqueous dispersion of copolymer (2a) for comparison <br> Composition (IIa) for comparison | ○<br>○ | ×<br>× | 5B<br>6B | △<br>× |
| Example 6 | Solution of copolymer (5) <br> Photo-curable composition (VI) | ○<br>○ | ×<br>○ | max. 6B<br>HB | ×<br>○ |
| Control 3 | Aqueous dispersion of copolymer (3a) for comparison <br> Composition (IIIa) for comparison | ○<br>○ | ×<br>× | max. 6B<br>max. 6B | △~×<br>× |
| Control 4 | Aqueous dispersion of copolymer (4a) for comparison <br> Composition (IVa) for comparison | ○<br>○ | ×<br>× | max. 6B<br>4B | ×<br>△~× |

It is clearly noted from the table 1 that in the case of a copolymer which was in conformity with the scope of this invention, the photo-curable composition obtained by the incorporation therein of a photopolymerizable monomer (B) was cured by exposure to the ultraviolet light in spite of the exclusion of a photopolymerization initiator and the cured film consequently obtained exhibited conspicuously improved properties as compared with an aqueous dispersion (or solution) of a copolymer, whereas in the case of a copolymer which was not in conformity with the scope of this invention, the composition obtained by the incorporation therein of a photopolymerizable monomer (B) was not cured by exposure to the ultraviolet light and exhibited rather poor properties as compared with the copolymer for comparison. It is further clear that in the case of a copolymer which was in the form of an aqueous dispersion, the photopolymerizable monomer functioned as a film-forming agent.

Example 8

A polymerizable monomer component was prepared by mixing 75 parts of 2-ethylhexyl acrylate, 123 parts of methyl methacrylate, and 2 parts of acrylic acid. In a four-neck flask provided with a stirrer, an inert gas inlet, a dropping funnel, a reflux condenser, and a thermometer, 2 parts of sodium dodecylbenzene sulfonate, 246 parts of deionized water, and 10% of the aforementioned polymerizable monomer component were placed and, in an atmosphere of nitrogen gas, stirred and heated to 60°C. The contents of the flask were initiated by addition thereto of 0.3 part of ammonium persulfate and the remainder of the polymerizable monomer component was added dropwise thereto at 60°C over a period of two hours. After the dropwise addition, the reaction was further continued at 60°C for one hour and thereafter 1.0 part of 25% aqua ammonia was added thereto. Consequently, there was obtained an aqueous dispersion of a copolymer (6 possessing an involatile content of 45% and a MFT of 40°C. The average molecular weight of the copolymer (6) was about 2,200,000.

Then, 100 parts of the aqueous dispersion of the copolymer (6) and 6 parts of trimethylol propane triacrylate (possessing a molecular weight of 296, a boiling point of not lower than 200°C, and a solubility parameter of 9.5) and 6 parts of N-vinyl pyrrolidone (possessing a molecular weight of 111, a boiling point of not lower than 200°C, and a solubility parameter of 10.6) were stirred at 40°C for one hour to effect absorption of the added monomers in the particles of the copolymer (6) and attain production of a photo-curable coating agent (I) possessing a MFT of not higher than 0°C.

Example 9

An aqueous dispersion of a copolymer (7) possessing an involatile content of 45% and a MFT of not lower than 50°C was obtained by following the procedure of Example 8, except that a polymerizable monomer component consisting of 98 parts of methyl methacrylate, 100 parts of methyl acrylate, and 2 parts of acrylic acid was used instead. The average molecular weight of the copolymer (2) was about 150,000.

Then, 100 parts of the aqueous dispersion of the copolymer (7) and 10 parts of diethylene glycol diacrylate (possessing a molecular weight of 241, a boiling point of not lower than 200°C, and a solubility parameter of 10.0) were stirred at 40°C for one hour to effect absorption of the added monomer in the particles of the copolymer (7) and attain production of a photo-curable coating agent (II) possessing a MFT of not higher than 0°C.

Example 10

A polymerizable monomer component was prepared by mixing 35 parts of methyl methacrylate, 65 parts of butyl acrylate, and 0.2 part of benzoyl peroxide. In the same flask as used in Example 8, 100 parts of toluene was placed and, in an atmosphere of nitrogen gas, stirred and heated to 80°C. Then, the aforementioned polymerizable monomer component was added dropwise thereto over a period of three hours. Then, the resultant mixture was further stirred at the same temperature for three hours, to produce a solution of a copolymer (8) possessing an involatile content of 50.0%. The average molecular weight of this copolymer (8) was about 60,000.

Then, 100 parts of the solution of the copolymer (8) and 20 parts of dipentaerythritol hexaacrylate (possessing a molecular weight of 578, a boiling point of not lower than 200°C, and a solubility parameter of 10.1) added thereto were stirred at room temperature, to produce a photo-curable coating agent (III).

Example 11

A photo-curable coating agent (IV) was produced by blending the photo-curable coating agent (II) obtained in Example 9 with the following coating-material ingredients: 64.6 parts of deionized water, 2.0 parts of Demor EP (produced by Kao Co., Ltd.), 0.3 part of Nopco 8034 (produced by San Nopco K.K.), 54.0 parts of titanium dioxide, 6.0 parts of kaolin, 150.0 parts of the photo-curable coating agent (II), and 0.3 part of hydroxyethyl cellulose.

Control 5

100 Parts of the aqueous dispersion of the copolymer (6) obtained in Example 8 and a mixture consisting of 12 parts of trimethylol propane triacrylate and 2 parts of benzoin isopropyl ether as a photopolymerization initiator were stirred at 40°C for one hour to effect absorption of the mixture in the particles of the copolymer (6) and attain production of a coating agent (Ia) for comparison possessing a MFT of not higher than 0°C.

Control 6

An aqueous dispersion of a copolymer (5a) for comparison possessing an involatile content of 45% and a MFT of 50°C by following the procedure of Example 8, except that the polymerizable monomer component was composed of 70 parts of butyl acrylate, 125 parts of styrene, and 5 parts of methacrylate. A coating agent (IIa) for comparison was produced by using the aqueous dispersion of the copolymer (5a) for comparison (possessing an average molecular weight of about 150,000).

Control 7

In the same flask as used in Example 8, 100 parts of toluene was placed and, in an atmosphere of nitrogen gas, stirred and heated to 80°C. Then, to the resultant solution, a polymerizable monomer component prepared in advance by mixing 35 parts of methyl methacrylate, 65 parts of butyl acrylate, 4 parts of dodecyl mercaptan, and 1 part of benzoyl peroxide was added dropwise was added dropwise over a period of three hours. Then, the resultant mixture was continuously stirred at the same temperature for three hours, to produce a solution of a copolymer (6a) for comparison possessing an average molecular weight of about 5,000.

Then, a coating agent (IIIa) for comparison was obtained by stirring 100 parts of the solution of the copolymer (6a) for comparison and 15 parts of trimethylol propane triacrylate at room temperature.

Example 12

Samples of the photo-curable coating agents (I) to (IV) and the coating agents (Ia) to (IIIa) for comparison obtained in the working examples and the controls described above were severally applied to flexible plates in a ratio of 20 g/m2 and dried at 100°C for three minutes. The coated flexible plates were cure in place on a conveyor provided at a position 10 cm above with a high-pressure mercury-vapor lamp of 120 W/cm and kept in motion at a rate of 5 /min, to be cure by exposure to the light from the lamp. The cured films consequently obtained were tested for film-forming property, antiblocking resistance, adhesiveness, pencil hardness, resistance to solvents, and weatherability. The results were as shown in Table 2. Samples of the photo-curable coating agents (I) and (II) and the coating agent (IIa) for comparison were severally applied to mild steel plates, plywood plates, quality paper, and flexible vinyl chloride plates in the same method as to the flexible plates described above, dried, and then cured. The cure coatings consequently obtained were tested for antiblocking resistance and adhesiveness. The results were as shown in Table 3. The properties were evaluated by the following methods.

Method for evaluation of property

Film-forming property: A sample coating agent was applied to a glass plate in an amount calculated to produce a dry layer 50 microns in thickness and dried at 20°C for one hour. The dry coating consequently obtained was visually examined and rated on the two-point scale, wherein (o) is the absence of abnormality and (x) is the presence of a discernible crack in the coating.

Antiblocking resistance; A pair of coatings from a given sample, immediately after exposure to the ultraviolet light, were superposed, compressed with a pressure of 5 kg/cm$^2$ at 50°C for 12 hours, and separated. The separated surfaces of the coatings were visually examined and rated on the two-point scale, wherein (o) is the absence of abnormality and (x) is the presence of a discernible injury of some sort or other.

Adhesiveness: A given coating resulting from the exposure to the ultraviolet light was evaluated as to the adhesiveness by a cross cut test conducted by the procedure specified in JIS K5400.

Pencil hardness: A given coating resulting from the exposure to the ultraviolet light was evaluated as to the pencil hardness by a pencil scratch test conducted by the procedure specified in JIS K5400.

Resistance to solvents: On a given coating resulting from the exposure to the ultraviolet light, 5 g of butyl

-31-

cellosolve was dropped and left standing thereon for 30 minutes. The surface of the coating was visually examined and rated on the three-point scale, wherein (o) is the absence of abnormality, ($\triangle$) is the presence of a sign of swell, and (x) is the presence of a sign of melting.

Weatherability: A given coating resulting from the exposure to the ultraviolet light was treated with a sunshine type Weather-0-meter for 200 hours and then examined as to the degree of coloration with the aid of a colorimeter. The weatherability of the coating was evaluated with the color difference (E).

Stability in storage: A given coating agent was placed in a glass vial having an inner volume of 200 ml and left standing under the illumination of an electric lamp at 50°C for one month and then examined as to the presence or absence of an increase the MFT or in the viscosity, with the rating conducted on the two-point scale wherein (o) is the absence of abnormality and (x) is the presence of abnormality of some form or other.

Table 2

| Example | Example | | | | Control | | |
|---|---|---|---|---|---|---|---|
| | 8 | 9 | 10 | 11 | 5 | 6 | 7 |
| Coating agent | Photo-curable coatings of this invention | | | | Coatings for comparison | | |
| | ( I ) | ( II ) | ( III ) | ( IV ) | ( I a) | ( II a) | ( III a) |
| Film-forming property | ○ | ○ | ○ | ○ | ○ | ○ | Cured film cannot be ablained |
| Antiblocking resistance | ○ | ○ | ○ | ○ | ○ | ○ | |
| Adhesiveness | 100/100 | 100/100 | 100/100 | 100/100 | 100/100 | 0/100 | |
| Pencil hardness | H | 2H | HB | 2H | H | 6B | |
| Resistance to solvents | ○ | ○ | ○ | ○ | ○ | × | |
| Weatherability ($\triangle$E) | 0.7 | 0.6 | 0.6 | 0.6 | 3.0 | 1.5 | |
| Stability in storage | ○ | ○ | ○ | ○ | × | ○ | |

Table 3

| Example | Example | | Control |
|---|---|---|---|
| | 8 | 9 | 6 |
| Coating agent | Coating of this invention | | Coating for comparison |
| | ( I ) | ( II ) | ( II a ) |
| Mild steel plate<br>  Antiblocking resistance<br>  Adhesiveness | ○<br>100/100 | ○<br>100/100 | ×<br>0/100 |
| Quality paper<br>  Antiblocking resistance<br>  Adhesiveness (adhesive tape test) | ○<br>100/100 | ○<br>100/100 | ×<br>100/100 |
| Soft vinyl chloride plate<br>  Antiblocking resistance<br>  Adhesiveness (adhesive tape test) | ○<br>○ | ○<br>○ | ×<br>× |

Referential Example 1

A polymerizable monomer component containing of 80 parts of methyl acrylate, 308 parts of 2-ethylhexyl acrylate, and 12 parts of acrylic acid was mixed by stirring with 8 parts of an emulsifier (produced by Sanyo Chemical Industries Co., Ltd. and marketed under trademark designation of "Hytenol N-08") and 120 parts of deionized water, to produce 528 parts of a pre-emulsion of the polymerizable monomer component.

In a glass flask having an inner volume of 2 liters and provided with a reflux condenser, a thermometer, a nitrogen gas inlet, a dropping funnel, and a stirrer, 268.8 parts of deionized water was heated to 70°C and kept at this temperature thereafter. The hot deionized water was kept under nitrogen atmosphere and stirred, 16 parts of an aqueous 10% ammonium persulfate solution was added thereto, and the aforementioned pre-emulsion and 8 parts of an aqueous 10% sodium hydrogen sulfite solution were simultaneously added thereto dropwise over a period of 90 minutes. After the dropwise addition, the resultant mixture was heated to 80°C and kept at this temperature for 60 minutes to complete polymerization and then cooled, to produce an aqueous dispersion of a copolymer (9) having a solids content of 50%. The copolymer (9) possessed a glass transition temperature of -55°C and an average molecular weight of 700,000.

Example 13

One hundred (100) parts of the aqueous dispersion of the copolymer (9) obtained in Referential Example 1 and 2 parts of 1,6-hexanediol diacrylate added thereto were mixed by stirring until the added 1,6-hexanediol diacrylate ceased to be discernible. The resultant solution and 0.2 part of an aqueous 25% polycarboxylic acid type thickener dispersion and 0.2 part of 25% aqua ammonia added thereto were homogeneously mixed to produce a photo-curable pressure sensitive adhesive composition (I) possessing a viscosity of 10,000 cp. Even after one month's standing in a bright place at 40°C, this photo-curable pressure sensitive adhesive composition (I) proved to be stable as evinced by the absence of any change in appearance.

Referential Control 1

An aqueous dispersion of a copolymer (7a) for comparison possessing a solids content of 50% by following the procedure of Referential Example 1, except that 80 parts of ethyl acrylate was used in the place of 80 parts of methyl acrylate. The copolymer (7a) for comparison possessed a glass transition temperature of -59°C and an average molecular weight of 680,000.

Control 8

A pressure sensitive adhesive composition (Ia) possessing a viscosity of 10,000 cp was obtained by following the procedure of Example 13, except that 100 parts of the aqueous dispersion of the copolymer (7a) for comparison obtained in Referential Control 1 was used in the place of 100 parts of the aqueous dispersion of the copolymer (9) of Referential Example 1 used in Example 13.

Example 14

The photo-curable pressure sensitive adhesive composition (I) obtained in Example 13 was applied to a release paper in an amount to form a dry layer 20 microns in thickness, dried at 90°C for two minutes, and then transferred to a quality paper. Then, the surface of the coating of the photo-curable pressure sensitive adhesive composition revealed to sight by the removal of the release paper was exposed for one second to the ultraviolet light emitted from a high-pressure mercury-vapor lamp of 120 W/cm disposed at a distance of 10 cm from the surface, to produce a pressure sensitive adhesive tape (I) using the quality paper as the substrate.

Example 15

The photo-curable pressure sensitive adhesive composition (I) obtained in Example 13 was applied to a release paper in an amount to form a dry layer 50 microns in thickness, dried at 90°C for two minutes, and then transferred to both surfaces of a non-woven fabric of rayon having a basis weight of 14 g/m$^2$. Then, the surfaces of the coatings of the photo-curable pressure sensitive adhesive composition (I) revealed to sight by the separation of the release paper were exposed for 3 seconds to the ultraviolet light in the same manner as in Example 14, to produce a double-faced pressure sensitive adhesive tape (II) about 100 microns in thickness using the non-woven fabric as the substrate.

Example 16

The surface of the coating of the photo-curable pressure sensitive adhesive composition (I) obtained on the release paper and not yet transferred to the non-woven fabric of rayon in Example 15 was exposed to the ultraviolet light in the same manner as in Example 15, to produce a double-faced pressure sensitive adhesive tape (III) using no substrate and possessing a thickness of 50 microns.

Example 17

A polyester film measuring 25 microns in thickness and having the surface thereof treated by corona discharge was transferred to one surface of the unsupported double-faced pressure sensitive adhesive tape obtained in Example 16, to produce a pressure sensitive adhesive tape (IV) using the polyester film as the substrate.

Example 18

The photo-curable pressure sensitive adhesive composition (I) obtained in Example 13 was applied to a polypropylene film measuring 40 microns in thickness and having the surface thereof treated by corona discharge in an amount to form a dry layer 30 microns in thickness and then dried at 90°C for two minutes. By exposing the surface of the resultant coating of the photo-curable pressure sensitive adhesive composition (I) to the ultraviolet light in the same manner as in Example 15, there was obtained a pressure sensitive adhesive tape (V) using the polypropylene film as the substrate.

Control 9

A pressure sensitive adhesive tape (Ia) for comparison was obtained by faithfully repeating the procedure of Example 14, except that the pressure sensitive adhesive composition (Ia) for comparison obtained in Control 8 was used in the place of the photo-curable pressure sensitive adhesive composition (I).

Control 10

A pressure sensitive adhesive tape (IIa) for comparison was obtained by faithfully repeating the procedure of Example 15, except that the pressure sensitive adhesive composition (Ia) for comparison obtained in Control 8 was used in the place of the photo-curable pressure sensitive adhesive composition (I).

Control 11

A pressure sensitive adhesive tape (IIIa) for comparison was obtained by faithfully repeating the procedure of Example 16, except that the pressure sensitive adhesive composition (Ia) for comparison obtained in Control 8 was used in the place of the photo-curable pressure sensitive adhesive composition (I).

Control 12

A pressure sensitive adhesive tape (IVa) for comparison was obtained by faithfully repeating the procedure of Example 17, except that the pressure sensitive adhesive composition (Ia) for comparison obtained in Control 8 was used in the place of the photo-curable pressure sensitive adhesive composition (I).

Control 13

A pressure sensitive adhesive tape (Va) for comparison was obtained by faithfully repeating the procedure of Example 13, except that the pressure sensitive adhesive composition (Ia) for comparison obtained in Control 8 was used in the place of the photo-curable pressure sensitive adhesive composition (I).

Example 19

Samples of the pressure sensitive adhesive tapes (I) to (V) obtained in Examples 14 to 18 and the pressure sensitive adhesive tapes (Ia) to (Va) obtained in Controls 9 to 13 were tested severally for tack, peel strength, and holding power as a criterion for cohesive force by the methods indicated below. In the case of a double-faced pressure sensitive adhesive tape, the tape was prepared in a form having a polyester film 25 microns in thickness attached fast to one surface thereof for facilitating the test. The results were as shown in Table 4.

[Tack] The tack was determined by the ball rolling method defined in JIS Z 0237.

[Peel strength] This property was determined by measuring the 180°C peel-back force (g/25 mm required for separation from the surface of a stainless steel plate as the substrate) as defined in JIS Z 0237.

[Holding power] This property was determined by applying a load of 1 kg to a sample in a bonded area of 20 mm x 20 mm at 80°C and measuring the holding time or the length of creep after a fixed standing time in accordance with the method defined in JIS Z 0237.

Table 4

(* Cohesive fracture)

| | Pressure sensitive adhesive tape | Tack | Peel strength | Holding power |
|---|---|---|---|---|
| Example 14 | ( I ) | 9 | 1300 | no creep for 2 hrs |
| Control 9 | for comparison ( I a) | 15 | 2000* | dropped within 0.5 min. |
| Example 15 | ( II ) | 18 | 1700 | no creep 2 hrs |
| Control 10 | for comparison ( II a) | 23 | 2300* | dropped within 0.1 min. |
| Example 16 | ( III ) | 13 | 1400 | no creep 2 hrs |
| Control 11 | for comparison ( III a) | 18 | 1800* | dropped within 0.2 min. |
| Example 17 | ( IV ) | 13 | 1400 | no creep 2 hrs |
| Control 12 | for comparison ( IV a) | 18 | 1800* | dropped within 0.2 min. |
| Example 18 | ( V ) | 10 | 1200 | no creep 2 hrs |
| Control 13 | for comparison ( V a) | 15 | 1900* | dropped within 0.3 min. |

Referential Example 2

An aqueous dispersion of a copolymer (10) possessing a solids content of 50% was obtained by faithfully repeating the procedure of Referential Example 1, except that the polymerizable monomer component was composed of 340 parts of lauryl methacrylate, 52 parts of vinyl acetate, and 8 parts of acrylic acid. The copolymer (10) possessed a glass transition temperature of -54°C and an average molecular weight of 500,000.

Example 20

One hundred (100) parts of the aqueous dispersion of the copolymer (10) obtained in Referential Example 2 and 1 part of trimethylol propane triacrylate added thereto were mixed by stirring until the added trimethylol propane triacrylate ceased to be discernible. Then, the resultant mixture was homogeneously mixed with 0.2 part of an aqueous 25% polycarboxylic acid type thickener dispersion and 0.2 part of 25% aqua ammonia, to produce a photo-curable pressure sensitive adhesive composition (II) possessing a viscosity of 9,000 cp. Even after one month's standing in a bright place at 40°C, this photo-curable pressure sensitive adhesive composition (II) proved to be stable as evinced by the absence of any change in appearance.

Example 21

A pressure sensitive adhesive tape (VI) was obtained by faithfully repeating the procedure of Example 14, except that the photo-curable pressure sensitive adhesive composition (II) obtained in Example 20 was used in the place of the photo-curing pressure sensitive adhesive composition (I).

Example 22

A pressure sensitive adhesive tape (VII) was obtained by faithfully repeating the procedure of Example 15, except that the photo-curable pressure sensitive adhesive composition (II) obtained in Example 20 was used in

-41-

the place of the photo-curable pressure sensitive adhesive composition (I).

Example 23

A pressure sensitive adhesive tape (VIII) was obtained by faithfully repeating the procedure of example 16, except that the photo-curable pressure sensitive adhesive composition (II) obtained in Example 20 was used in the place of the photo-curable pressure sensitive adhesive composition (I).

Example 24

A pressure sensitive adhesive tape (IX) was obtained by faithfully repeating the procedure of Example 17, except that the photo-curing pressure sensitive adhesive composition (II) obtained in Example 20 was used in the place of the photo-curing pressure sensitive adhesive composition (I).

Example 25

A pressure sensitive adhesive tape (X) was obtained by faithfully repeating the procedure of Example 18, except that the photo-curable pressure sensitive adhesive composition (II) obtained in Example 20 was used in the place of the photo-curable pressure sensitive adhesive composition (I).

Example 26

The pressure sensitive tapes (VI) to (X) obtained in Examples 21 to 25 were severally tested for performance as pressure sensitive adhesive tape by faithfully following the procedure of Example 19. The results were as shown in Table 5.

Table 5

| | Pressure sensitive adhesive tape | Tack | Peel strength | Holding power |
|---|---|---|---|---|
| Example 21 | (VI) | 7 | 1100 | no creep for 2 hrs |
| Example 22 | (VII) | 16 | 1600 | no creep for 2 hrs |
| Example 23 | (VIII) | 12 | 1300 | no creep for 2 hrs |
| Example 24 | (IX) | 12 | 1300 | no creep for 2 hrs |
| Example 25 | (X) | 9 | 1200 | no creep for 2 hrs |

-42-

Example 27

The pressure sensitive adhesive tapes (I) to (X) obtained in Examples 14 to 18 and Examples 21 to 25 and summarized in Tables 4 and 5, even after six months' elapse of following their fabrication were found to be stable as evinced by the substantial absence of any change in their performance.

When the film-supported pressure sensitive adhesive tapes (IV), (V), (IX), and (X) obtained in Examples 17 and 18 and Examples 24 and 25 were left sticking to the outer surface of a window pane for not less than six months, their pressure sensitive adhesive layers proved to excel in weatherability as evinced by the absence of coloration and deterioration.

As clearly noted from the results of Examples 19, 26, and 27, the pressure sensitive adhesive tapes as pressure sensitive adhesive articles of this invention excel not only in tack, peel strength, and holding power but also in stability of such performances and further exhibit outstanding weatherability. Thus, they are usable for applications intended to offer fast union or to protection or effect other similar functions and are also usable in the form of sheets or labels for various purposes as protection, decoration, and display, for example.

Referential Example 3

A polymerizable monomer component containing 188 parts of methyl methacrylate, 100 parts of 2-ethylhexyl acrylate, 88 parts of vinyl acetate, and 24 parts of acrylic acid was mixed by stirring with 8 parts of an emulsifier (produced by Sanyo Chemical Industries Co., Ltd. and marketed under trademark designation of "Hytenol N-08") and 120 parts of deionized water, to produce 528 parts of a pre-emulsion of a polymerizable monomer component.

In a glass flask having an inner volume of 2 liters and provided with a reflux condenser, a thermometer, a nitrogen gas inlet, a dropping funnel, and a stirrer, 268.8 parts of deionized water was heated to 70°C and kept at this temperature thereafter. The hot deionized water was kept under nitrogen atmosphere and stirred, 16 parts of an aqueous 10% ammonium persulfate solution was added thereto, and the aforementioned pre-emulsion and 8 parts of an aqueous 10% sodium hydrogen sulfite were immediately added simultaneously thereto over a period of 90 minutes. After the dropwise addition was completed, the resultant mixture was heated to 80°C and kept at this temperature for 60 minutes to bring the polymerization to completion. Then, the mixture was cooled, to produce an aqueous dispersion of a copolymer (11) possessing a solids content of 50%. The average molecular weight of this copolymer (11) was 700,000.

Referential Example 4

An aqueous dispersion of a copolymer (12) possessing a solids content of 50% was obtained by faithfully repeating the procedure of Referential Example 3, except that the polymerizable monomer component was composed of 200 parts of methyl acrylate, 180 parts of cyclohexyl methacrylate, and 20 parts of acrylic acid instead. The average molecular weight of the copolymer (12) was 760,000.

Referential Control 2

A copolymer (8a) for comparison possessing a solids content of 50% was obtained by faithfully repeating the procedure of Referential Example 3, except that 188 parts of styrene was used in the place of 188 parts of methyl methacrylate. The average molecular weight of the copolymer (8a) for comparison was 650,000.

Example 28

One hundred (100) parts of the aqueous dispersion of the copolymer (11) obtained in Referential Example 3 and 10 parts of neopentyl glycol dimethacrylate added thereto were stirred until the added neopentyl glycol dimethacrylate ceased to be discernible. The resultant mixture was homogeneously mixed with 0.2 part of an aqueous 25% polycarboxylic acid type thickener dispersion and 0.2 part of 25% aqua ammonia, to produce a photo-curable adhesive composition (I) possessing a viscosity of 10,000 cp. Even after one month's standing in a bright place at 40°C, the photo-curable adhesive composition (I) proved to be stable as evinced by the absence of any change in appearance.

The photo-curable adhesive composition (I) was applied to a polypropylene sheet 0.5 mm in thickness in an amount to form a dry layer 60 microns in thickness, dried at 90°C for three minutes, then attached fast to an aluminum plate, and exposed for five seconds through the polypropylene sheet to the ultraviolet light emitted from a high-pressure mercury-vapor lamp of 120 W/cm disposed at a distance of 10 cm, to produce a cured film of the photo-curable adhesive composition (I). The resultant bonded article (I) composed of the polypropylene sheet and the aluminum plate was tested for 180° peel strength which was conducted at a pulling speed of 300 mm/min. The results were as shown in Table 6.

Example 29

A photo-curable adhesive composition (II) possessing a viscosity of 10,000 cp was produced by faithfully repeating the procedure of Example 28, except that the aqueous dispersion of the copolymer (12) obtained in Referential Example 4 was used in the place of the aqueous dispersion of the copolymer (11) and trimethylolpropane triacylate was used in the place of neopentyl glycol dimethacrylate. Then, a bonded article (II) composed of the polypropylene sheet and the aluminum plate was similarly produced. Even after one month's standing in a bright place at 40°C, the photo-curable adhesive composition (II) proved to be stable as evinced by the absence of any change in appearance.

The bonded article (II) of the polypropylene sheet and the aluminum plate was similarly tested for 180° peel strength. The results were as shown in Table 6.

Control 14

An adhesive composition (Ia) for comparison possessing a viscosity of 10,000 cp and a bonded article (Ia) for comparison were produced by faithfully repeating the procedure of Example 28, except that the copolymer (8a) for comparison obtained in Referential Control 2 was used in the place of the aqueous dispersion of the copolymer (11).

The bonded article (Ia) was subjected to the 180° peel strength test in the similar manner as in Example 28. The results were as shown in Table 6.

Table 6

|  | Bonded article | Adhesive strength (kg/25 mm) |
|---|---|---|
| Example 28 | (I) | 5.3 |
| Example 29 | (II) | 6.5 |
| Control 14 | (Ia) for comparison | 1.2 |

Example 30

Even after one year's exposure to the outdoor conditions, the bonded articles (I) and (II) of polypropylene sheet and aluminum plate obtained respectively in Examples 28 and 29 proved to be excellent in weatherability as evinced by the absence of coloration and deterioration of adhesive layer.

Example 31

A bonded article (III) composed of a polypropylene sheet and an aluminum plate was produced by repeating the procedure of Example 28, except that a photo-curable adhesive composition (III) obtained by one month's standing of the photo-curable adhesive composition (I) in a bright place at 40°C was used in the place of the photo-curable adhesive composition (I).

-46-

This bonded article (III) composed of a polypropylene sheet and an aluminum plate was subjected to the 180° peel strength test in the same manner as in Example 28. The results were as shown in Table 7.

Example 32

A bonded article (IV) composed of a polypropylene sheet and an aluminum plate was produced by repeating the procedure of Example 28, except that a photo-curable adhesive composition (IV) obtained by one month's standing of the photo-curable adhesive composition (II) in a bright place at 40°C was used in the place of the photo-curable adhesive composition (II).

This bonded article (IV) was subjected to the 180° peel strength test in the same manner as in Example 28. The results were as shown in Table 7.

Table 7

| | Bonded article | Adhesive strength (kg/25 mm) |
|---|---|---|
| Example 31 | (III) | 5.5 |
| Example 32 | (IV) | 6.4 |

Referential Example 5

In the same flask as used in Referential Example 3, 400 parts of toluene was placed and kept under a gentle flow of nitrogen gas and heated to 60°C and a polymerizable monomer component prepared in advance by mixing 140 parts of methyl methacrylate, 252 parts of butyl acrylate, 8 parts of acrylic acid, and 0.4 part of benzoyl peroxide was added dropwise thereto over a period of four hours. The resultant mixture was continuously stirred at the same temperature for eight hours and then cooled to room temperature, to produce a solution of a copolymer (13) possessing a solids content

-47-

of 50.0%. The average molecular weight of the copolymer (13) was about 100,000.

Example 33

A photo-curable adhesive composition (V) was produced by mixing 100 parts of the solution of the copolymer (13) obtained in Referential Example 5 with 15 parts of trimethylol propane triacrylate at room temperature. Even after one month's standing in a bright place at 40°C, the photo-curable adhesive composition (V) proved to be stable as evinced by the absence of any change in appearance.

A bonded article (V) composed of a polypropylene sheet and an aluminum plate was produced by repeating the procedure of Example 28, except that the photo-curable adhesive composition (V) was used in the place of the photo-curable adhesive composition (I). When this bonded article (V) was tested for 180° peel strength in the same manner as in Example 28, the strength was found to be 4.8 kg/25 mm.

Example 34

A bonded article (VI) composed of a polypropylene sheet and an aluminum plate was produced by repeating the procedure of Example 28, except that a photo-curable adhesive composition (VI) obtained by one month's standing of the photo-curable adhesive composition (V) in a bright place at 40°C was used in the place of the photo-curable adhesive composition (V).

When this bonded article (VI) was tested for 180° peel strength in the same manner as in Example 28, the strength was found to be 4.9 kg/25 mm.

Control 15

An adhesive composition (IIa) for comparison and a bonded article (IIa) for comparison were obtained by repeating the procedure of Example 33, except that the amount of trimethylolpropane triacrylate to be used was changed to 0.2 part.

When the bonded article (IIa) for comparison was tested for 180° peel strength in the same manner as in Example 28, the strength was found to be 0.1 kg/25 mm.

INDUSTRIAL APPLICABILITY

As described above, this invention is directed to a photo-curable composition, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 99% by weight (as solids) of the (co)polymer (A) : 60 to 1% by weight of the photopolymerizable monomer (B) and containing substantially no photopolymerization initiator. As compared with the conventional UV-curable resin which has necessitated incorporation therein of several % of a photopolymerization initiator based on the amount of the resin, the photo-curable composition of this invention has no use for any photopolymerization initiator and yet can be cured with the active energy ray such as the ultraviolet ray to form a film excelling in vairous properties. The photo-curable composition of this invention, therefore, offers an overall solution to the drawbacks such as high cost, poor stability in storage, and poor weatherability suffered by the conventional UV-curable resin composition owing to the photopolymerization initiator. It is, accordingly, useful as a coating agent for building materials made of such metallic substances as iron and aluminum and wood and other inorganic substances, as a coating agent or an adhesive agent for films, sheets, and shaped articles of plastic substances, and as a coating agent and a binder for fiber products and paper products, for example.

The photo-curable coating agent of this invention is produced by combining in a specific ratio the (co)polymer (A) incorporating therein a specific monomer in an amount

-49-

exceeding a fixed level and the photopolymerizable monomer (B). As compared with the conventional ultraviolet light-curable resin which has necessitated incorporation therein of 3 to 5% by weight of a photopolymerization initiator based on the solids content of the resin, the photo-curable coating agent of this invention incorporates therein substantially no photopolymerization initiator and yet can be cured with the active energy ray such as the ultraviolet ray to form a coating excelling in various properties. Particularly, when the (co)polymer is in the form of an aqueous dispersion of resin, the produced coating excels in film-forming property and various other properties because the photopolymerizable monomer acts as a film-forming agent during the formation of the film. The photo-curable coating agent of this invention, therefore, offers an overall solution to the drawbacks such as high cost, poor stability in storage, and poor weatherability suffered by the conventional UV-curable coating agent owing to the photopolymerization initiator. It is advantageously usable as a coating agent for inorganic building materials such as calcium silicate board, pulp cement board, wood wool cement board, autoclaved concrete board, autoclaved cellular concrete board, asbestos cement board, gypsum board, hardboard, mortar, and plaster, metallic materials of iron and aluminum, and materials made of wood, paper, and plastic substances, for example.

The photo-curable pressure sensitive adhesive composition of this invention is produced by combining in a specific ratio the (co)polymer incorporating therein a specific monomer in an amount exceeding a fixed level and the photopolymerizable monomer. As compared with the conventional UV-curable resin which has necessitated incorporation therein of a photopolymerization initiator, this photo-curable pressure sensitive adhesive composition has substantially no use for any photopolymerization initiator and yet can be cure with the active energy ray

-50-

such as the ultraviolet light to produce a coating possessing highly desirable properties for a pressure sensitive adhesive agent. The photo-curable pressure sensitive adhesive composition of this invention, accordingly, offers an overall solution to the drawbacks such as high cost, poor stability in storage, and poor weatherability suffered by the conventional UV-curable adhesive composition owing to the photopolymerization initiator.

The pressure sensitive adhesive articles of this invention, i.e. pressure sensitive adhesive tapes, sheets, and labels, possess as their adhesive layer the cured film of the photo-curable pressure sensitive adhesive composition of this invention described above and, therefore, excel in economy and weatherability and exhibit highly desirable properties including stability in storage.

The photo-curable adhesive composition of this invention is produced by combining in a specific ratio the (co)polymer incorporating therein a specific monomer in an amount exceeding a specific level and the photopolymerizable monomer. As compared with the conventional UV-curable resin which has necessitated incorporation therein of several % of a photopolymerization initiator based on the amount of the resin, the photo-curable adhesive composition of this invention contains substantially no photopolymerization initiator and yet can be easily cure with the active energy ray, particularly the ultraviolet-light, to join two objects strongly by forming therebetween an adhesive layer excelling in various properties. Since the photopolymerizable monomer functions as a plasticizer for the (co)polymer in this composition in an uncured form, it allows two objects to be easily bonded. The photo-curable adhesive composition of this invention, therefore offers an overall solution to the drawbacks such as high cost, poor stability in storage, and poor weatherability suffered by the conventional UV-curable resin owing to the photopolymerization initiator.

The method for the union of two objects according with the present invention resides in using the aforementioned photo-curable adhesive composition and effectively utilizing the viscidity this composition exhibits prior to the curing and the adhesive force the composition exhibits after the curable. It, therefore, manifests a highly desirable workability in the union of these objects and, after it has been cured to establish the desired union, retains the consequently generated adhesive force stably for a long time. Particularly, in the case of the method which effects union of two objects at least one of which is pervious to light by enabling the interposed layer of the composition to be cured with the ultraviolet light passed through the light-pervious object, the apparatus to be used for the curable is simple and the characteristic of the photo-curable adhesive composition of this invention can be manifested most effectively. Thus, this method can be utilized effectively for union of such a pair of objects which have been heretofore joined only with difficulty.

CLAIMS

1. A photo-curable composition, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 99% by weight (as solids) of said (co)polymer (A) : 60 to 1% by weight of said photopolymerizable monomer (B) and containing substantially no photopolymerization initiator.

2. A composition according to claim 1, wherein said (co)polymer (A) is an aqueous dispersion.

3. A composition according to claim 2, wherein said photopolymerizable monomer (B) possesses a molecular weight in the range of 100 to 1,000, a solubility parameter in the range of 8 to 12, and a boiling point of not lower than 100°C.

4. A composition according to claim 3, wherein said photopolymerizable monomer (B) is a compound possessing at least one carbon-carbon double bond capable of radical polymerization within the molecular unit thereof.

5. A composition according to claim 2, wherein said methacrylate monomers are alkyl esters of methacrylic acid whose alkyl groups possess 1 to 12 carbon atoms.

6. A composition according to claim 5, wherein the content of at least one polymerizable monomer selected from the group consisting of methacrylate monomers and methyl acrylate is not less than 30% by weight.

7. A composition according to claim 2, wherein said (co)polymer (A) possesses a weight average molecular weight in the range of 100,000 to 3,000,000.

8. A composition according to claim 4, wherein said photopolymerizable monomer (B) has as essential components thereof at least one member selected from the group

-53-

consisting of di-, tri-, tetra-, penta-, and hexa-esters of (meth)acrylic acids with polyhydric alcohols.

9. A composition according to claim 2, wherein the ratio of said (co)polymer (A) : said photopolymerizable monomer (B) is in the range of 50 to 98% by weight (as solids) : 50 to 2% by weight.

10. A photo-curable coating agent, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 98% by weight (as solids) of said (co)polymer (A) : 60 to 2% by weight of said photopolymerizable monomer (B) and containing substantially no photopolymerization initiator.

11. A coating agent according to claim 10, wherein said (co)polymer (A) is an aqueous dispersion.

12. A coating agent according to claim 11, wherein said photopolymerizable monomer (B) possesses a molecular weight in the range of 100 to 1,000, a solubility parameter in the range of 8 to 12, and a boiling point of not lower than 100°C.

13. A coating agent according to claim 12, wherein said photopolymerizable monomer (B) is a composed possessing at least one carbon-carbon double bond capable of radical polymerization within the molecular unit thereof.

14. A coating agent according to claim 11, wherein said methacrylate monomers are alkyl esters of methacrylic acid whose alkyl groups possess 1 to 12 carbon atoms.

15. A coating agent according to claim 14, wherein the content of at least one polymerizable monomer selected from the group consisting of methacrylate monomers and methyl acrylate is not less than 30% by weight.

16.    A coating agent according to claim 11, wherein said (co)polymer (A) possesses a weight average molecular weight in the range of 100,000 to 3,000,000.

17.    A coating agent according to claim 13, wherein said photopolymerizable monomer (B) has as essential components thereof at least one member selected from the group consisting of di-, tri-, tetra-, penta-, and hexa-esters of (meth)acrylic acids with polyhydric alcohols.

18.    A coating agent according to claim 11, wherein the ratio of said (co)polymer (A) : said photopolymerizable monomer (B) is in the range of 50 to 95% by weight (as solids) : 50 to 5% by weight.

19.    A photo-curable adhesive composition, characterized by comprising (A) a (co)polymer of a weight average molecular weight of not less than 10,000 obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 40 to 98% by weight (as solids) of said (co)polymer (A) : 60 to 2% by weight of said photopolymerizable monomer (B) and containing substantially no photopolymerization initiator.

20.    A composition according to claim 19, wherein said (co)polymer (A) is an aqueous dispersion.

21.    A composition according to claim 20, wherein said photopolymerizable monomer (B) possesses a molecular weight in the range of 100 to 1,000, a solubility parameter in the range of 8 to 12, and a boiling point of not lower than 100°C.

22.    A composition according to claim 21, wherein said photopolymerizable monomer (B) is a compound possessing at least one carbon-carbon double bond capable of radical polymerization within the molecular unit thereof.

23.    A composition according to claim 20, wherein said methacrylate monomers are alkyl esters of methacrylic acid whose alkyl groups possess 1 to 12 carbon atoms.

24.    A composition according to claim 23, wherein the content of at least one polymerizable monomer selected from the group consisting of methacrylate monomers and methyl acrylate is not less than 30% by weight.

25.    A composition according to claim 20, wherein said (co)polymer (A) possesses a weight average molecular weight in the range of 100,000 to 3,000,000.

26.    A composition according to claim 22, wherein said photopolymerizable monomer (B) has as essential components thereof at least one member selected from the group consisting of di-,tri-, tetra-, penta-, and hexa-esters of (meth)acrylic acids with polyhydric alcohols.

27.    A composition according to claim 20, wherein the ratio of said (co)polymer (A) : said photopolymerizable monomer (B) is in the range of 50 to 95% by weight (as solids) : 50 to 5% by weight.

28    A composition according to Claim 19, which further incorporates therein a tackifier.

29.    A method for the union of two objects, which is characterized by the steps of first forming a coating of the photo-curable adhesive composition cure forth in claim 19 on at least one of the opposed surfaces of said two objects, attaching said objects fast to each other across said coating, and thereafter exposing said coating to an active energy ray thereby curing said coating.

30.    A method according to claim 29, wherein said (co)polymer (A) is an aqueous dispersion.

31.    A method according to claim 30, wherein said photopolymerizable monomer (B) possesses a molecular weight in the range of 100 to 1,000, a solubility parameter in the range of 8 to 12, and a boiling point of not lower than 100°C

32.　　　A method according to claim 29, wherein said active energy ray is ultraviolet light, electron beam, or gamma ray.

33.　　　A photo-curable pressure sensitive adhesive composition, characterized by comprising (A) a (co)polymer of a weight average molecular weight of not less than 10,000 and a glass transition temperature of not higher than -20°C obtained by (co)polymerizing a polymerizable monomer component containing in a ratio of not less than 10% by weight at least one polymerizable monomer selected from the group consisting of methacrylate monomers and methyl acrylate and (B) a photopolymerizable monomer in a ratio of 90 to 99% by weight (as solids) of said (co)polymer (A) : 10 to 1% by weight of said photopolymerizable monomer (B) and containing substantially no photopolymerization initiator.

34.　　　A composition according to claim 33, wherein said (co)polymer (A) is an aqueous dispersion.

35.　　　A composition according to claim 34, wherein said photopolymerizable monomer (B) possesses a molecular weight in the range of 100 to 1,000, a solubility parameter in the range of 8 to 12, and a boiling point of not lower than 100°C.

36.　　　A composition according to claim 35, wherein said photopolymerizable monomer (B) is a compound possessing at least one carbon-carbon double bond capable of radical polymerization within the molecular unit thereof.

37.　　　A composition according to claim 34, wherein said methacrylates monomers are alkyl esters of methacrylic acid whose alkyl groups possess 1 to 12 carbon atoms.

38.　　　A composition according to claim 37, wherein the content of at least one polymerizable monomer selected from the group consisting of methacrylate monomers and methyl acrylate is not less than 20% by weight.

39.　　　A composition according to claim 34, wherein said (co)polymer (A) possesses a weight average molecular weight in the range of 100,000 to 3,000,000.

40.    A composition according to claim 36, wherein said photopolymerizable monomer (B) has as essential components thereof at least one member selected from the group consisting of di-, tri-, tetra-, penta-, and hexa-esters of (meth)acrylic acids with polyhydric alcohols.

41.    A composition according to claim 34, wherein the ratio of said (co)polymer (A) : said photopolymerizable monomer (B) is in the ragne of 95 to 98% by weight (as solids) : 5 to 2% by weight.

42.    A composition according to claim 33, which further incorporates therein a tackifier.

43.    A pressure sensitive article, produced by using as an adhesive layer the cured product of the composition cure forth in claim 33.

44.    An adhesive article according to claim 43, wherein said (co)polymer (A) is an aqueous dispersion.

45.    An adhesive article according to claim 44, wherein said photopolymerizable monomer (B) possesses a molecular weight in the range of 100 to 1,000, a solubility parameter in the range of 8 to 12, and a boiling point of not lower than 100°C.

# INTERNATIONAL SEARCH REPORT

International Application No    PCT/JP88/00759

## I. CLASSIFICATION OF SUBJECT MATTER (if several classification symbols apply, indicate all) 6

According to International Patent Classification (IPC) or to both National Classification and IPC

Int.Cl4    C08F2/46, C09D3/49, C09J3/14

## II. FIELDS SEARCHED

### Minimum Documentation Searched 7

| Classification System | Classification Symbols |
|---|---|
| IPC | C08F2/46, C09D3/49, C09J3/14 |

### Documentation Searched other than Minimum Documentation to the Extent that such Documents are included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 57-159693 (Dainippon Printing Co., Ltd.) 1 October 1982 (01. 10. 82) Claim and page 2, lower left column, line 7 to lower right column, line 2 (Especially lower left column, lines 12, 13) and page 4, Example 4 (Family: none) | 1-18 |
| Y | JP, B2, 57-46054 (Asahi Chemical Industry Co., Ltd.) 1 October 1982 (01. 10. 82) Claim and page 3, Example 1 (Family: none) | 1-18 |
| Y | JP, A, 59-89309 (Three Bond Co., Ltd.) 23 May 1984 (23. 05. 84) Claim and page 2, upper right column, line 13 to lower left column, line 7 and page 3, Example 2 (Family: none) | 1-18 |
| Y | JP, A, 61-103908 (Nitto Electric Industrial Co., Ltd.) 22 May 1986 (22. 05. 86) | 19-45 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 19, 1988 (19. 09. 88) | October 3, 1988 (03. 10. 88) |

| International Searching Authority | Signature of Authorized Officer |
|---|---|
| Japanese Patent Office | |

Form PCT/ISA/210 (second sheet) (January 1985)

| FURTHER INFORMATION CONTINUED FROM THE SECOND SHEET | | |
|---|---|---|
| Y | Claim (Family: none)<br><br>·Taisei-sha Henshubu-hen Optical · Radiation<br>Koka Gijutsu<br>5 August 1985 (05. 08. 85) Taisei-sha<br>Kabushiki Kaisha (Tokyo)<br>p86 L.20-L22. | 1-45 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed require-ments to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)